# EUROPEAN PATENT APPLICATION

(11) **EP 2 079 237 A1**
(43) Date of publication of application: **15.07.2009**
(21) Application number: 08100422.8
(22) Date of filing: 14.01.2008
(51) Int. Cl.: H04N 7/16, H04N 5/00

(54) **Conditional access system**

(71) Applicant: Irdeto Access B.V., 2132 HD Hoofddorp (NL)
(72) Inventor: Vegt, van der, Arjen, 3515 BB, UTRECHT (NL)
(74) Representative: Metman, Karel Johannes

(57) **Abstract**

The invention provides an improved conditional access system with efficient bandwidth usage on the interface between a receiver and a conditional access module. The conditional access system has a receiver, a selection module, a conditional access module and possibly a terminal. The conditional access module has a first memory for storing service identifiers of services and transmits one or more service identifiers to the selection module. The selection module receives an input signal from the receiver and selects from the input signal those sub-signals as identified by the service identifiers and transmits the sub-signals to the conditional access module.

## Description

### FIELD OF THE INVENTION

The present invention relates to a conditional access system, a conditional access module adapted for use in a conditional access system, a terminal adapted for use in a conditional access system and a method for use in a conditional access system.

### BACKGROUND

Conditional access systems are generally used to provide conditional access to services like pay TV. In a conditional access system, scrambled pay TV signals are received by a receiver and descrambled by a conditional access module. The conditional access module can be implemented as a smart card reader with a removable smart card, or as a single module. The descrambled signals are viewable on terminals like a television, a PC or a mobile phone. Terminals can be equipped with a specific player - either implemented in hardware or in software - to view the descrambled signals.

In known conditional access systems a receiver receives a digital video broadcast signal, demodulates the signal and performs channel decoding. A packet stream acquired from the broadcast signal, which comprises e.g. a MPEG-2 transport stream, is transmitted from the receiver to a conditional access module, where it can be partially or fully descrambled. If packets in the packet stream are not scrambled, the conditional access module transmits the packets back to a connected terminal. If packets are scrambled and the packets belong to a selected service, then the packets are descrambled and transmitted to the connected terminal. The terminal presents the descrambled services to the end-user, e.g. through a player. Examples of such services are music streams, video streams, television streams and an electronic service guide.

A drawback of known conditional access systems is that the entire packet stream is transmitted from the receiver to the conditional access module. Consequently a high bandwidth interface is required between receiver and conditional access module.

### SUMMARY OF THE INVENTION

It is an object of the invention to provide an improved conditional access system. It is a further object of the invention to overcome the high bandwidth usage of the prior art on the interface between a receiver and a conditional access module.

The objects are achieved by a conditional access system, a conditional access module adapted for use in a conditional access system, a terminal adapted for use in a conditional access system, and a method for use in a conditional access system having the features as defined in the independent claims.

According to an aspect of the invention a conditional access system is provided comprising a first receiver, a selection module and a conditional access module. The conditional access module comprises a first memory for storing one or more service identifiers of one or more services. Service identifiers can be pre-stored or stored during use of the conditional access module and are capable of selecting one or more services. The conditional access module further comprises a first transmitter configured for transmitting one or more service identifiers from the first memory to the selection module. The selection module comprises a second receiver configured for receiving an input signal from the first receiver and a selector configured for selecting from the input signal one or more sub-signals identified by the one or more service identifiers. The selector further comprises a second transmitter configured for transmitting the one or more selected sub-signals to the conditional access module.

In another aspect of the invention, a method for use in a conditional access system comprising a first receiver, a selection module, and a conditional access module is proposed. The method comprises transmitting one or more service identifiers from the conditional access module to the selection module and receiving in the selection module an input signal from the first receiver. One or more sub-signals are selected from the input signals as identified by the one or more service identifiers. The one or more sub-signals are transmitted from the selection module to the conditional access module.

Thus, the conditional access system of the invention advantageously enables that only a selected portion of the input signal, i.e. the one or more sub-signals selected from the input signal, is transmitted to the conditional access module for further processing, such as descrambling. This advantageously reduces the bandwidth usage on the interface between receiver and conditional access module. Moreover, because the conditional access system of the invention transmits the service identifier to the conditional access module and subsequently the selected sub-signals are transmitted from the selection module to the conditional access module, i.e. the conditional access module controls the selection of sub-signals, functionality can advantageously be implemented in the conditional access module without affecting the implementation of the selection module or of a terminal communicatively connected to the conditional access module.

The embodiments of claims 2 and 15 advantageously enable updating or upgrading the firmware computer program that is used to control the functionality of the conditional access module.

The embodiments of claims 3 and 16 advantageously enable user interaction through the terminal for selecting a service. The one or more service identifiers to be transmitted from the conditional access module to the selector correspond to the indication of the selected service, advantageously enabling the selection module to select only those sub-signals that were selected at the terminal by the user.

The embodiments of claims 4 and 17 advantageously enable the conditional access module to control the look-and-feel of the electronic service guide and which services can be selected at the terminal.

The embodiments of claims 5 and 18 enable the selected descrambled services to be presented to the end-user of the terminal.

The embodiments of claims 6 and 19 advantageously prevent transmission of descrambled sub-signals from the conditional access module to the terminal which could e.g. be tapped. The terminal further comprises a decryptor for decrypting the encrypted descrambled sub-signals using the key. The terminal comprises a transmitter configured for transmitting the decrypted descrambled sub-signals to the player.

The embodiments of claims 7 and 20 advantageously further reduce the bandwidth usage on the interface between receiver and conditional access module. Moreover, by having the selection module select the free-to-air sub-signals directly, for these free-to-air sub-signals the conditional access module advantageously does not need to process the sub-signals. This advantageously enables the terminal to view free-to-air sub-signals without conditional access module.

The embodiment of claim 8 simplifies the design of the conditional access module and the terminal.

The embodiment of claim 9 advantageously enables the conditional access module to have the receiving and selection functionality integrated while a communicatively connected terminal can be used.

The embodiment of claim 10 advantageously enables the terminal to have receiving and selection functionality integrated while a communicatively connected conditional access module can be used.

According to an aspect of the invention a conditional access module is provided adapted for use in a conditional access system having one or more of the above mentioned features.

According to an aspect of the invention a terminal is provided adapted for use in a conditional access system having one or more of the above mentioned features. The terminal is preferably a mobile terminal.

According to an aspect of the invention a selection module is proposed.

### BRIEF DESCRIPTION OF THE DRAWINGS

Aspects of the invention will be explained in greater detail by reference to exemplary embodiments shown in the drawings, in which:
Fig.1 shows a conditional access system of an exemplary embodiment of the invention;
Fig.2 shows a conditional access system of an exemplary embodiment of the invention;
Fig.3 shows a conditional access system of an exemplary embodiment of the invention;
Fig.4 shows a conditional access system of an exemplary embodiment of the invention;
Fig.5 shows a conditional access system of an exemplary embodiment of the invention;
Fig.6 shows a schematic view of a method of an exemplary embodiment of the invention;
Fig.7 shows a schematic view of a method of an exemplary embodiment of the invention.

### DETAILED DESCRIPTION OF THE DRAWINGS

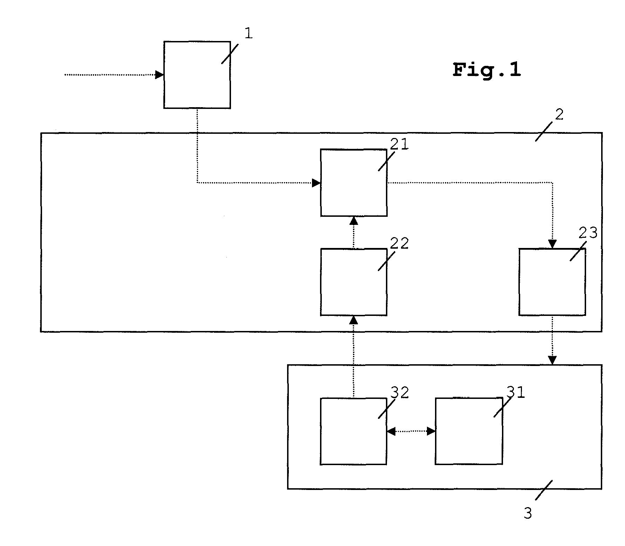

The conditional access system shown in Fig.1 consists of a receiver 1, a selection module 2 and a conditional access module 3. Receiver 1 is communicatively connected to selection module 2. Selection module 2 is communicatively connected to conditional access module 3 through multiple interfaces, typically logical interfaces that are implemented over a single channel.

Receiver 1 is configured to receive a digital broadcast signal as an input signal from an external source, such as a head-end. The receiver 1 is capable of receiving digital broadcast signals. Digital broadcast signals typically conform to a standard, e.g. the DVB-H or T-DMB standard for digital terrestrial television for handhelds or the DVB-T standard for terrestrial digital television. Other examples of digital broadcast standards are DVB-C, DVB-S, DVB-T2, DVB-C2, DVB-S2, DVB-SH, Media Flo, S-DMB and MBMS. In a manner known per se, the receiver 1 demodulates the signal and performs channel decoding to acquire a packet stream that is broadcasted with the signal. In DVB-T digital broadcasting the packet stream is typically a MPEG-2 transport stream. Other standards may use other transport stream protocols. The MPEG-2 transport stream is transmitted from receiver 1 to selection module 2 where it is received in receiver 21.

In the MPEG-2 transport stream, multiple packetized services such as video, audio, television channels and other data such as electronic service guides (ESG) are multiplexed. In the MPEG-2 standard services are also referred to as programs. A single television channel may comprise multiple audio, video and possibly data streams such as subtitles data. To be able to use a particular service, one or more sub-signals belonging to the service need to be demultiplexed from the transport stream. In the MPEG-2 standard sub-signals are also referred to as subframes or transport stream packets. Data packets associated with a particular program are identified in the MPEG-2 transport stream. To lower the bandwidth requirements for the interface to the conditional access module, the desired program is demultiplexed from the MPEG-2 transport stream prior to transmitting it to the conditional access module 3. Thus it is avoided that the full MPEG-2 transport stream is transmitted to the conditional access module 3.

Services are identified by service identifiers which are stored in a first memory 31 of the conditional access module 3. Service identifiers can be pre-stored or stored during use of the conditional access module. Service identifiers can be stored permanently or temporary. A service identifier is read from the memory 31 and transmitted by transmitter 32 to the selection module 2. With the service identifier, selection module 2, through selector 22, selects from the MPEG-2 transport stream the service as identified by the service identifier. The service identifier is also known as Packet Identifier (PID). The thus acquired demultiplexed sub-signals belonging to the service are transmitted through transmitter 23 to the conditional access module 3 for further processing, such as descrambling.

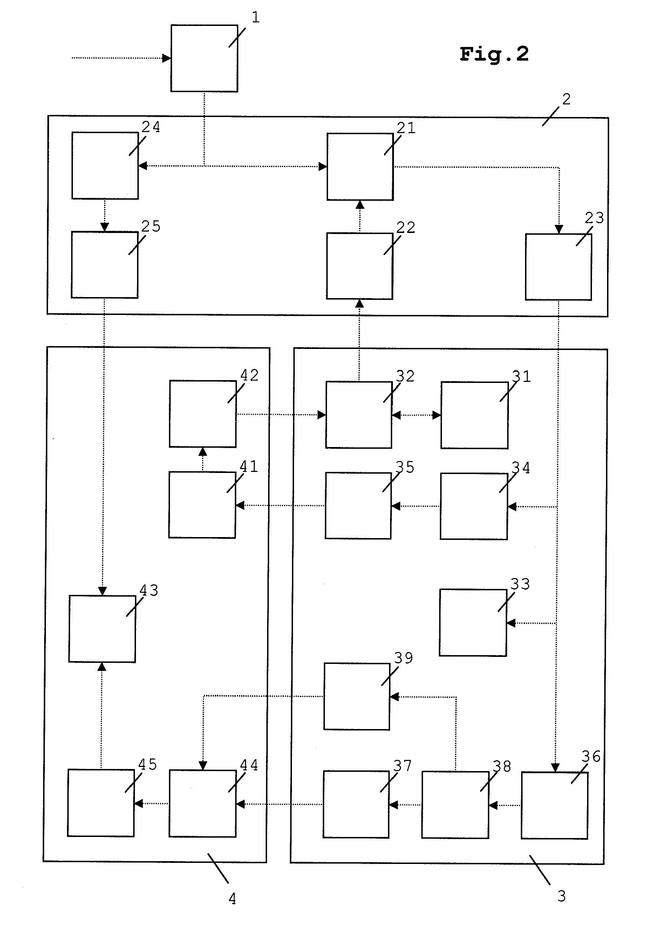

The service identifier selected from the first memory 31 is determined in response to receiving a user signal of a user of a terminal for rendering the signal. An example of such an embodiment is described below with reference to Fig. 2. In particular, the conditional access module 3 is configured to receive a selection signal identifying the service identifier to be selected.

The conditional access system as shown in Fig.2 is based on the conditional access module as shown in Fig.1, with additional functionality. In addition to the conditional access system of Fig.1, in Fig. 2 the conditional access system has a terminal 4 that is communicatively connected to the conditional access module 3 through multiple interfaces, typically logical interfaces that are implemented over a single channel. Terminal 4 is also connected to the selection module 2. Terminal 4 is end-user equipment that enables user interaction for selecting services. Selected services are, in case of audio, video or television channels, to be displayed through player 43 in the terminal 4. Player 43 typically performs rendering and encoding of audio and video.

The conditional access system of Fig.2 is capable of distinguishing free-to-air services from scrambled services. Free-to-air signals are not scrambled and do not need to be descrambled by the conditional access module (3). Selection module 2 contains a selector 24 configured for selecting one or more free-to-air sub-signals from the MPEG-2 transport stream. The free-to-air sub-signals are transmitted to the player 43 through a transmitter 25. On the other hand, scrambled services, e.g. scrambled based on the Common Scrambling Algorithm (CSA) or the AES-128 algorithm, are processed by selection module 2 as described with reference to Fig.1. Only after processing by conditional access module 3, the sub-signals of scrambled services are transmitted to player 43 as will be described below in further detail. It should be appreciated that integration of the various functions described in the application is generally possible. As an example, receiver 21 and selector 24 may be integrated in a single module

The conditional access module 3 is capable of generating an electronic service guide. Hereto, the module is equipped with an electronic service guide module 34, which is e.g. a software module capable of receiving an electronic service guide service from the input signal through the selection module 2. Module 34 adds formatting data to the electronic service guide data and transmits the formatted electronic service guide, through transmitter 35, to the terminal 4. The terminal presents the formatted electronic service guide to the end-user in a manner known per-se, and a service is selected through selecting means 41. Selecting means 41 is e.g. a HTML, XHTML or WML browser. The selecting means 41 typically include a software module for receiving input from a keyboard or touch screen. An indication of the selected service is transmitted, through transmitter 42, to the conditional access module 3. The conditional access module 3 finds the service identifier corresponding to the indication of the selected service in first memory 31 and transmits the service identifier to the selection module 2 as described with reference to Fig.1.

Next, the sub-signals of the selected service are transmitted from selection module 2 to conditional access module 3. The sub-signals are received in descrambler 36, where the sub-signals are descrambled. The descrambled sub-signals are transmitted to the terminal 4 for playback on the player 43.

To prevent the descrambled sub-signals from being tapped on the interface between conditional access module 3 and terminal 4, the descrambled sub-signals are encrypted by encryptor 38 prior to transmitting the sub-signals, through transmitter 37, to the terminal 4. Advanced Encryption Standard AES-128 is e.g. used as the encryption algorithm. The decryption key, e.g. a shared SAC (Secured Authentication Channel) key, required to decrypt the sub-signals in decryptor 44 is transmitted to a decryptor 44 through transmitter 39. Transmission of the SAC key is optionally protected, e.g. by using the Transport Level Security (TLS) protocol, also known as HTTPS. The decrypted descrambled sub-signals are transmitted to player 43 through provider 45, where they are displayed.

Conditional access module 3 is equipped with a second memory 33 for storing a computer program, in particular firmware. The firmware is arranged to control the functionality of the conditional access module 3. The computer program can optionally be updated or upgraded by sub-signals for a firmware service received by receiver 1, selected through selection module 2 and received in the conditional access module 3.

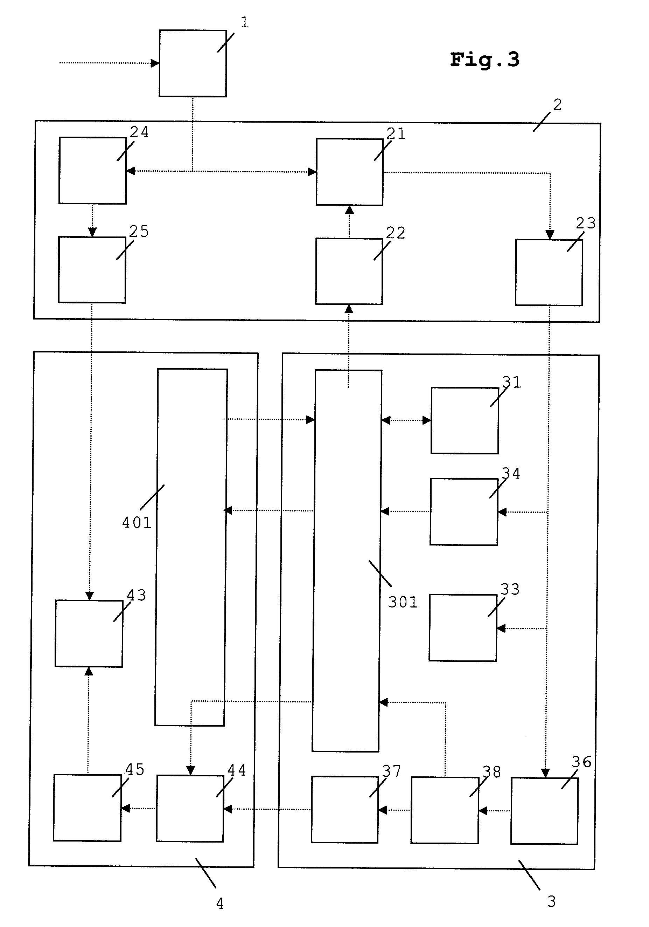

In the conditional access system as shown in Fig.3, the conditional access module 3 integrates transmitters 32, 35 and 39 into a server 301, and integrates selecting means 41 and transmitter 42 into a client 401. The server 301 is typically a HTTP or HTTPS server and the client 401 is typically a HTTP client or web browser.

In Fig.3 the decryption key, e.g. the SAC key, is transmitted to from encryptor 38 to decryptor 44 through the HTTP server 301 and HTTP client 401 in a HTTP message. The HTTP message is typically protected using the Transport Level Security (TLS) protocol, also known as HTTPS. The server 301 also selects the service identifier from the first memory 31 and provides the selected service identifier to the selector 22 of the selection module 2 in order to select the portion of the input signal that is to be transmitted to the conditional access module 3 for further processing.

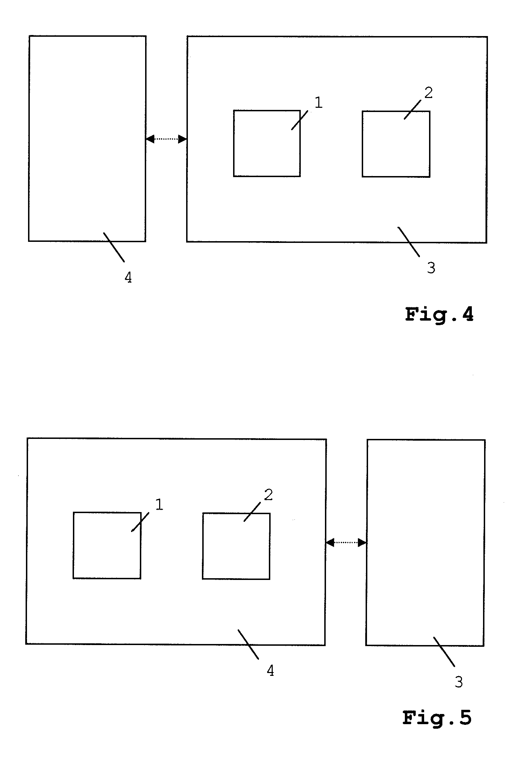

Fig.4 shows a conditional access system comprising two separable elements: terminal 4 and conditional access module 3. Receiver 1 and selection module 2 are embedded in conditional access module 3.

Fig. 5 shows a conditional access system comprising two separable elements: terminal 4 and conditional access module 3. Receiver 1 and selection module 2 are embedded in terminal 4.

The conditional access module as shown in the figures can be implemented in devices with an SD(IO) interface, e.g. in a Mini-SD card or Micro-SD card. Terminal 4 is then equipped with a SD(IO) slot wherein the SD-card is to be inserted.

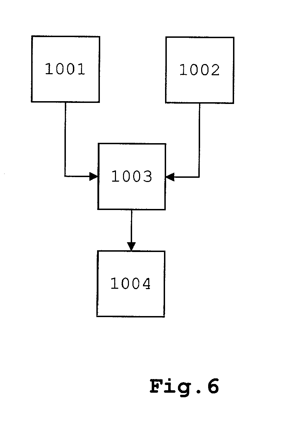

Fig.6 shows the steps of a method for use in the conditional access system as shown Fig.1. In step 1001 one or more service identifiers are transmitted from the conditional access module 3 to the selection module 2. In step 1002 an input signal is received from receiver 1 in the selection module 2. From the input signal, one or more sub-signals identified by the one or more service identifiers are selected in step 1003. The one or more sub-signals are transmitted from the selection module 2 to the conditional access module 3 in step 1004 for further processing.

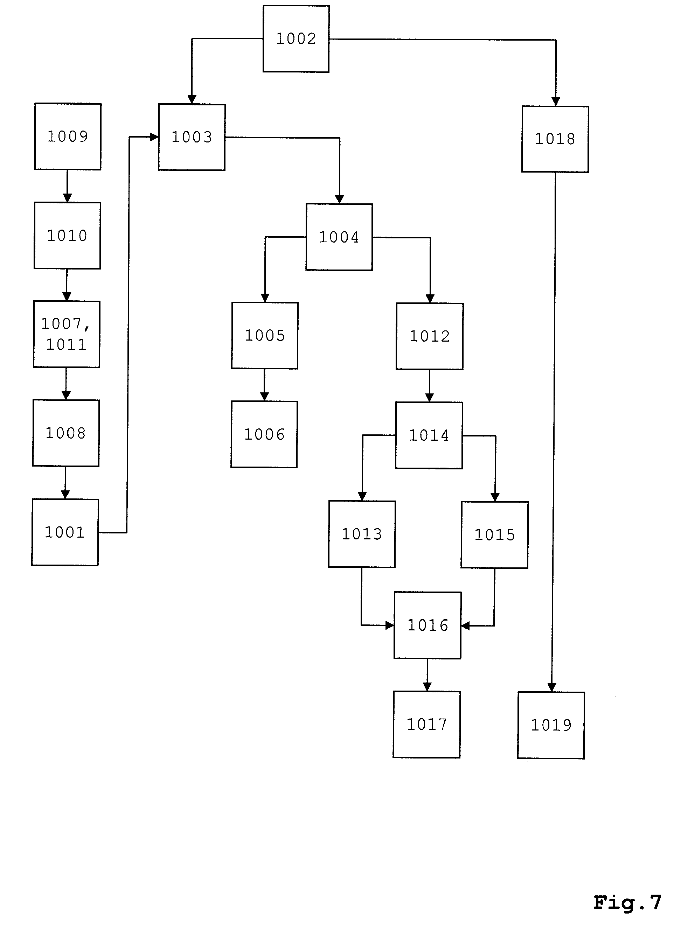

Fig.7 shows the steps of a method for use in the conditional access system as shown in Fig.2 or Fig.3. In step 1002 an input signal is received from receiver 1 in the selector 2. In step 1009 an electronic service guide is generated in the conditional access module 3 based on data received in a specific sub-signal. In step 1010 the electronic service guide is transmitted from the conditional access module 3 to the terminal 4. In step 1011 a service is selected in the terminal 4 from the electronic service guide. Step 1007 is similar to step 1011, but does not require the service guide for selecting the service. In step 1008 an indication of the selected service is transmitted from the terminal 4 to the conditional access module 3. In step 1001 one or more service identifiers are transmitted from the conditional access module 3 to the selection module 2, whereby the one or more service identifiers correspond to the indication of the selected service in step 1007, 1011. From the input signal one or more sub-signals identified by the one or more service identifiers are selected in step 1003. The one or more sub-signals are transmitted from the selection module 2 to the conditional access module 3 in step 1004.

In case the sub-signals contain a firmware update or upgrade, steps 1005 and 1006 are performed. In step 1005 the conditional access module 3 receives the computer program that is comprised in the one or more sub-signals. In step 1006 the computer program is stored in memory 33 of the conditional access module 3.

In case the sub-signals contain video, audio or a television channel, steps 1012-1017 are performed. In step 1012 the one or more sub-signals are descrambled in the conditional access module 3. In step 1014 the descrambled sub-signals are encrypted in the conditional access module 3. In step 1015 a key is transmitted from the conditional access module 3 to the terminal 4. In step 1013 the encrypted descrambled sub-signals are transmitted to player 43 in the terminal 4. In step 1016 the encrypted descrambled sub-signals are decrypted in the terminal 3 using the key. In step 1017 the decrypted descrambled sub-signals are transmitted to the player 43.

Free-to-air services do not need to be descrambled by the conditional access module 3. In step 1018 one or more free-to-air sub-signals are selected from the input signal in the selection module 2. In step 1019 the free-to-air sub-signals are transmitted from the selection module 2 to the player 43, effectively bypassing the conditional access module 3.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from appropriate consideration of the drawings, the disclosure, and the appended claims.

## Claims

1. Conditional access system comprising a first receiver (1), a selection module (2), and a conditional access module (3), wherein the conditional access module (3) comprises:
a first memory (31) for storing service identifiers of one or more services; and
a first transmitter (32) configured for transmitting one or more service identifiers from the first memory to the selection module (2), and the selection module (2) comprises:
a second receiver (21) for receiving an input signal from the first receiver (1);
a selector (22) configured for selecting from the input signal one or more sub-signals identified by the one or more service identifiers; and
a second transmitter (23) configured for transmitting the one or more sub-signals to the conditional access module (3).

2. Conditional access system according to claim 1, wherein the conditional access module (3) further comprises a second memory (33) storing a computer program configured for controlling operation of the conditional access module (3).

3. Conditional access system according to any of the claims 1-2, wherein the conditional access system further comprises a terminal (4), the terminal (4) comprising:
means (41) configured for selecting a service and to provide a selection signal corresponding to the selected service; and
a transmitter (42) configured for transmitting an indication of the selected service to the conditional access module (3) in response to receiving said selection signal, and wherein the one or more service identifiers to be transmitted from the conditional access module (3) to the selection module (2) correspond to the indication of the selected service.

4. Conditional access system according to claim 3, wherein the conditional access module (3) further comprises:
an electronic service guide module (34) configured for generating an electronic service guide; and
a transmitter (35) configured for transmitting the electronic service guide to the terminal (4), wherein the terminal (4) is configured to allow selection of the service from the electronic service guide.

5. Conditional access system according to any of the claims 3-4, wherein the terminal (4) further comprises a player (43), and wherein the conditional access module (3) further comprises:
a descrambler (36) for descrambling the one or more sub-signals; and
a transmitter (37) configured for transmitting the descrambled sub-signals to the player (43).

6. Conditional access system according to claim 5,
wherein the conditional access module (3) further comprises:
an encryptor (38) for encrypting the descrambled sub-signals; and
a transmitter (39) configured for transmitting a key to the terminal (4), and
the terminal (4) further comprises a decryptor (44) configured for decrypting the encrypted descrambled sub-signals using the key, and
the terminal (4) comprises a provider (45) configured for providing the decrypted descrambled sub-signals to the player (43).

7. Conditional access system according to any of the claims 5-6, wherein the selection module (2) comprises a selector (24) configured for selecting one or more free-to-air sub-signals from the input signal and a transmitter (25) configured for transmitting the free-to-air sub-signals to the player bypassing the conditional access module.

8. Conditional access system according to any of the claims 1-7, wherein at least one of the first transmitter (32) configured for transmitting one or more service identifiers to the selection module (2), the transmitter (35) configured for transmitting the electronic service guide to the terminal (4) and the transmitter (39) configured for transmitting a key to the terminal (4) are integrated into a server (301), and wherein the means (41) for selecting a service and the transmitter (42) configured for transmitting an indication of the selected service to the conditional access module (3) are integrated into a client (401).

9. Conditional access system according to any of the claims 1-8, wherein the first receiver (1) and the selection module (2) are contained in the conditional access module (3).

10. Conditional access system according to any of the claims 3-8, wherein the first receiver (1) and the selection module (2) are contained in the terminal (4).

11. Conditional access module (3) adapted for use in a conditional access system according to any of the claims 1-10.

12. Terminal (4) adapted for use in a conditional access system according to any of the claims 3-10.

13. A selection module (2) adapted for use in a conditional access system according to one or more of the claims 1-10.

14. Method for use in a conditional access system comprising a first receiver (1), a selection module (2), and a conditional access module (3), the method comprising the steps of:
transmitting (1001) one or more service identifiers from the conditional access module (3) to the selection module (2);
receiving (1002) in the selection module (2) an input signal from the first receiver (1);
selecting (1003) from the input signal one or more sub-signals identified by the one or more service identifiers; and
transmitting (1004) the one or more sub-signals from the selection module (2) to the conditional access module (3).

15. Method according to claim 14, the method further comprising the steps of:
receiving (1005) in the conditional access module (3) a computer program that is comprised in the one or more sub-signals; and
storing (1006) the computer program in a memory (33) of the conditional access module (3),
wherein the computer program is configured for controlling operation of the conditional access module (3).

16. Method according to any of the claims 14-15, wherein the conditional access system further comprises a terminal (4) and the method further comprising the steps of:
selecting (1007) a service in the terminal (4); and
transmitting (1008) an indication of the selected service from the terminal (4) to the conditional access module (3), and wherein the one or more service identifiers to be transmitted from the conditional access module (3) to the selector (2) correspond to the indication of the selected service.

17. Method according to claim 16, the method further comprising the steps of:
generating (1009) an electronic service guide in the conditional access module (3);
transmitting (1010) the electronic service guide from the conditional access module (3) to the terminal (4); and
selecting (1011) the service in the terminal (3) from the electronic service guide.

18. Method according to any of the claims 16-17, the method further comprising the steps of:
descrambling (1012) the one or more sub-signals in the conditional access module (3); and
transmitting (1013) the descrambled sub-signals to a player (43) comprised in the terminal (4).

19. Method according to claim 18, the method further comprising the steps of:
encrypting (1014) the descrambled sub-signals in the conditional access module (3);
transmitting (1015) a key from the conditional access module (3) to the terminal (4);
decrypting (1016) the encrypted descrambled sub-signals in the terminal (3) using the key; and
transmitting (1017) the decrypted descrambled sub-signals to the player (43).

20. Method according to any of the claims 14-19, the method further comprising the steps of:
selecting (1018) in the selection module (2) one or more free-to-air sub-signals from the input signal; and
transmitting (1019) the free-to-air sub-signals from the selection module (2) to the player (43) bypassing the conditional access module (3).
